# EUROPEAN PATENT SPECIFICATION

(11) **EP 3 132 691 B1**
(45) Date of publication and mention of the grant of the patent: **29.01.2020**
(21) Application number: 15779263.1
(22) Date of filing: 09.04.2015
(51) Int. Cl.: A23L 27/00, A23G 1/00, A23G 1/30, A23D 7/005, A23D 9/00

(54) **FAT-CONTAINING FOODSTUFF**
FETTHALTIGES LEBENSMITTEL
ALIMENT CONTENANT DE LA GRAISSE

(30) Priority: 16.04.2014 JP 2014084403; 19.03.2015 JP 2015055828
(43) Date of publication of application: 22.02.2017
(73) Proprietor: The Nisshin OilliO Group, Ltd., Tokyo 104-8285 (JP)
(72) Inventor: HASEGAWA, Yuusuke, Yokosuka-shi Kanagawa 239-0832 (JP); HATANO, Yoshiyuki, Yokosuka-shi Kanagawa 239-0832 (JP)
(74) Representative: Dennemeyer & Associates S.A.
(86) International application number: PCT/JP2015/061113
(87) International publication number: WO 2015/159794

(56) References cited:
- EP-A2- 2 183 979
- WO-A1-00/40101
- WO-A1-2012/005347
- CN-A- 101 965 891
- JP-A- H02 163 197
- JP-A- 2001 046 012
- JP-A- 2011 072 271
- JP-A- 2013 078 307
- US-A- 5 360 621
- US-A1- 2010 226 994
- "Frebini sip feeds", , 5 December 2011 (2011-12-05), pages 1-2, XP055013857, Retrieved from the Internet: URL:http://www.fresenius-kabi.com/files/FS _Frebini_sipfeed_ANSICHT.pdf [retrieved on 2011-12-05]

## Description

### TECHNICAL FIELD

### <CROSS REFERENCE>

This application claims priority from Japanese Patent Application No. 2014-84403 filed with the Japan Patent Office on April 16, 2014, and Japanese Patent Application No. 2015-55828 filed with the Japan Patent Office on March 19, 2015.

The present invention relates to an oils and fats-containing food that contains a sugar alcohol.

### BACKGROUND ART

As a food containing a lot of oils and fats and saccharides, chocolate, cream, and the like are well known. For example, chocolate is generally a food containing as a raw material cacao mass, sugar, cocoa butter, milk powder, and the like, and having high palatability. Chocolate is largely made from oils and fats and sugar. For this reason, chocolate is also a food that is high in calories. Therefore, as the number of diabetes patients and potential diabetes patients is increasing in recent years, there is increasing the demand for a so-called low-sugar chocolate that includes a reduced amount of sugar or a so-called sugarless chocolate that does not include sugar, which inhibits blood sugar levels from rising.

As a low-sugar or sugarless chocolate, a chocolate that includes a sugar alcohol or dietary fiber instead of sugar is known. For example, Patent Literature 1 discloses a low-calorie chocolate that includes at least one selected from the group consisting of highly pure crystallized maltitol, lactitol, hydrogenated isomaltulose, and a low-calorie saccharide polymer. Also, Patent Literature 2 discloses a chocolate that includes as a sugar alternative one or more reducing sugars selected from reduced palatinose, reduced lactose, and reduced malt sugar, and that further includes water-soluble, non-digestible dextrin. Patent Literature 3 discloses a chocolate including a medium chain fatty acid oil, suitable as sweetness modifier for an oils and fats-containing food that contains a sugar alcohol. Patent Literature 4 discloses energy/fibre drink containing a medium chain tryglyceride. Patent Literature 5 discloses a granule containing a medium-chain fatty acid triglyceride in an amount of 13-27 % in the product. Patent Literature 6 discloses a low-energy healthy chocolate comprising cocoa butter and low-energy cocoa butter.

However, in the chocolate that includes a sugar alternative sweetener such as a sugar alcohol, the sweetness of the sugar alternative sweetener is generally lower than that of sugar. Furthermore, the sweetness of the sugar alternative sweetener is different from that of sugar. Therefore, the sugar alternative sweetener has a drawback that palatability is poor. For overcoming such a drawback, there is taken a countermeasure such as adding a small amount of a sweetener having high sweetness, such as sucralose and stevia, to the sugar alternative sweetener such as a sugar alcohol for compensating sweetness. However, for example, the quality and perception of sweetness are unnatural compared to those of sugar. Therefore, it cannot be said that the problem regarding sweetness has been sufficiently solved.

Cream that contains a lot of oils and fats and saccharides also has a similar problem to the above.

### CITATION LIST

### PATENT LITERATURE

PATNET LITERATURE 1: JP-A-5-260894
PATENT LITERATURE 2: JP-A-7-79704
PATENT LITERATURE 3: EP 2183979 A2
PATENT LITERATURE 4: "Frebini sip feeds", pages 1-2, XP055013857
PATENT LITERATURE 5: US 2010/226994 A1
PATENT LITERATURE 6: CN 101965891 A

### SUMMARY OF THE INVENTION

### PROBLEMS TO BE SOLVED BY THE INVENTION

Therefore, an objective of the present invention is to provide an oils and fats-containing food that contains a sugar alcohol and has excellent sweetness expression and high palatability.

### SOLUTION TO THE PROBLEMS

The present inventors have conducted extensive studies for solving the above-described problems. As a result, they found that the problems can be solved by containing, in oils and fats of an oils and fats-containing food that contains a sugar alcohol, a triacylglycerol having a medium chain fatty acid as a constituent fatty acid. Thus, the present invention has been achieved. The invention is strictly defined by the appended claims.

That is, according to an embodiment of the present disclosure, which does not describe part of the present invention, there can be provided a sweetness modifier for an oils and fats-containing food that contains a sugar alcohol, which contains as an active ingredient a triacylglycerol having a medium chain fatty acid of 6 to 12 carbons as a constituent fatty acid.

According to a preferred embodiment of the present disclosure, there can be provided a sweetness modifier for an oils and fats-containing food that contains a sugar alcohol. A medium chain fatty acid as a constituent fatty acid in a triacylglycerol contained in this sweetness modifier includes only a medium chain fatty acid of 8 and/or 10 carbons.

According to another embodiment of the present disclosure, there can be provided an oils and fats-containing food that contains a sugar alcohol, which contains a sugar alcohol, oils and fats, and the sweetness modifier for an oils and fats-containing food that contains a sugar alcohol.

According to further another embodiment of the present disclosure, there can be provided a sweetness modifying method of an oils and fats-containing food that contains a sugar alcohol, including setting a content of a triacylglycerol having a medium chain fatty acid of 6 to 12 carbons as a constituent fatty acid in oils and fats in the oils and fats-containing food that contains a sugar alcohol to be 0.5 to 100% by mass.

According to an embodiment of the present invention, there is provided a chocolate or cream containing 20 to 70% by mass of a sugar alcohol and 20 to 70% by mass of oils and fats, in which the oils and fats contain 1 to 50% by mass of a triacylglycerol consisting of a medium chain fatty acid of 6 to 12 carbons as a constituent fatty acid.

According to a preferred embodiment of the present invention, there can be provided a chocolate or cream in which the number of carbons of a medium chain fatty acid in the triacylglycerol having a medium chain fatty acid as a constituent fatty acid is 8 to 12.

According to a preferred embodiment of the present invention, there can be provided a chocolate or cream having 5 to 50% by mass of the triacylglycerol consisting of the medium chain fatty acid as a constituent fatty acid.

According to a preferred embodiment of the present invention, there can be provided the above-described chocolate or cream which further contains 0.2% by mass or less of a high-sweetness sweetener.

### EFFECTS OF THE INVENTION

According to the present invention, there can be provided an oils and fats-containing food that contains a sugar alcohol and has excellent sweetness expression and high palatability. According to the present disclosure, there can be further provided a sweetness modifier that contains as an active ingredient a triacylglycerol having a medium chain fatty acid as a constituent fatty acid, for modifying the sweetness of an oils and fats-containing food that contains a sugar alcohol. According to the present disclosure, there can be further provided a sweetness modifying method of an oils and fats-containing food that contains a sugar alcohol, including using a triacylglycerol having a medium chain fatty acid of 6 to 12 carbons as a constituent fatty acid.

### DESCRIPTION OF THE EMBODIMENTS

Hereinafter, the present invention will be described in order.

A preferred embodiment of the oils and fats-containing food according to the present invention is a chocolate.

As described herein, a chocolate is not limited to the chocolate defined in "Fair Competition Codes concerning Labeling on Chocolates" (Japan Chocolate Industry Fair Trade Conference) or laws and regulations. The main raw material of the chocolate according to the present invention is edible oils and fats and a sugar alcohol. Cacao components (cacao mass, cocoa powder, and the like), dairy products, flavors, emulsifiers, or the like are added to the main raw material as necessary. Such a chocolate is manufactured through chocolate manufacturing processes (all or some of a mixing process, a refining process, a conching process, a molding process, cooling process, and the like). Also, the chocolate according to the present invention includes a white chocolate and a color chocolate as well as a dark chocolate and a milk chocolate.

The chocolate according to the present invention contains 20 to 70% by mass of a sugar alcohol. As a sugar alcohol to be contained in the chocolate according to the present invention, a sugar alcohol obtained by an industrial reduction treatment of saccharides is conveniently used. Specific examples thereof may include maltitol, lactitol, reduced isomaltulose, xylitol, erythritol, mannitol, and sorbitol. One sugar alcohol may be used alone, or two or more sugar alcohols may be used in combination. The chocolate according to the present invention includes preferably maltitol, reduced isomaltulose, xylitol, or erythritol, and particularly preferably reduced isomaltulose. The chocolate according to the present invention contains a sugar alcohol in an amount of preferably 25 to 60% by mass, and more preferably 30 to 55% by mass.

The chocolate according to the present invention is a low-sugar chocolate that includes a reduced amount of sugar or a sugarless chocolate that does not include sugar. Therefore, the content of sugar contained in the chocolate according to the present invention is preferably 10% by mass or less, and more preferably 0 to 5% by mass. Also, the content of saccharides contained in the chocolate according to the present invention is preferably 10% by mass or less, and more preferably 0 to 5% by mass. Here, saccharides mean monosaccharides and disaccharides. Specific examples thereof may include fructose, glucose, sucrose, maltose, and lactose.

The chocolate according to the present invention may contain a small amount of a high-sweetness sweetener for compensating the sweetness of the chocolate. The high-sweetness sweetener is a sweetener having the sweetness that is at least not less than 100 times greater than that of sugar. Examples thereof may include sucralose, acesulfame potassium, and stevia extract. The content of the high-sweetness sweetener contained in the chocolate according to the present invention is preferably 2% by mass or less, more preferably 0.001 to 0.2% by mass, and further preferably 0.01 to 0.1 % by mass.

The chocolate according to the present invention contains oils and fats in an amount of 20 to 70% by mass. The content of the oils and fats contained in the chocolate according to the present invention is preferably 25 to 60% by mass, and more preferably 30 to 55% by mass. It is noted that the oils and fats in the chocolate according to the present invention include oils and fats (cocoa butter, milk fat, and the like) derived from an oil-containing raw material (cacao mass, cocoa powder, whole milk powder, and the like), other than the oils and fats to be formulated. For example, in general, the content (oil percentage) of the oils and fats (cocoa butter) in cacao mass is 55% by mass. The content (oil percentage) of the oils and fats (cocoa butter) in cocoa powder is 11% by mass. The content (oil percentage) of the oils and fats (milk fat) in whole milk powder is 25% by mass. Therefore, the content of the oils and fats in the chocolate comes to be a sum of the values each obtained by multiplying a formulated amount (mass %) of each raw material in the chocolate by the oil percentage.

The chocolate according to the present invention contains a triacylglycerol consisting of a medium chain fatty acid as a constituent fatty acid (a medium chain fatty acid-containing triacylglycerol). The medium chain fatty acid in the present invention is a fatty acid of 6 to 12 carbons. This medium chain fatty acid is preferably a saturated linear fatty acid. More specifically, the medium chain fatty acid is preferably an n-hexanoic acid, an n-octanoic acid, an n-decanoic acid, or an n-dodecanoic acid as a fatty acid of 6 to 12 carbons, more preferably an n-octanoic acid, an n-decanoic acid, or an n-dodecanoic acid as a fatty acid of 8 to 12 carbons, and further preferably an n-octanoic acid or an n-decanoic acid as a fatty acid of 8 to 10 carbons.

The medium chain fatty acid-containing triacylglycerol (hereinafter, also indicated as the MTG) contained in the chocolate according to the present disclosure is a triacylglycerol having the above-described medium chain fatty acid as a part of or the whole of its constituent fatty acid. The triacylglycerol having the medium chain fatty acid as the whole of its constituent fatty acid (a triacylglycerol having only the medium chain fatty acid as its constituent fatty acid) is a medium chain fatty acid triacylglycerol (hereinafter, also indicated as an MCT). The MCT is included in the MTG.

An acid other than the medium chain fatty acid contained as the constituent fatty acid in the medium chain fatty acid-containing triacylglycerol according to the present disclosure is preferably a long chain fatty acid. A long chain fatty acid is a saturated fatty acid or an unsaturated fatty acid, having 14 or more carbons, and preferably 14 to 22 carbons. Examples thereof may include a myristic acid, a palmitic acid, a stearic acid, a behenic acid, an oleic acid, a linoleic acid, and a linolenic acid.

When the medium chain fatty acid-containing triacylglycerol according to the present disclosure has a long chain fatty acid as its constituent fatty acid (hereinafter, also indicated as an MLCT), the MLCT has a structure indicated as MLL, LML, LLM, MML, MLM, or LMM. Here, M indicates a medium chain fatty acid. L indicates a long chain fatty acid. Also, the structure of the medium chain fatty acid triacylglycerol (MCT) is indicated as MMM. As the analysis and calculation method of the medium chain fatty acid-containing triacylglycerol, a method known in the art can be used. For details, Review of R. J. VANDERWAL (Jarnal of American Oil Chemists' Society 40, 242-247 (1963)) or the like can be referred.

The medium chain fatty acid-containing triacylglycerol according to the present invention is manufactured by a transesterification reaction and/or an esterification reaction which are usually performed in the processing of oils and fats. For example, the medium chain fatty acid triacylglycerol (MCT) can be manufactured by heating a medium chain fatty acid and glycerol to 120 to 180°C for dehydration and condensation according to a method known in the art. This condensation reaction is preferably performed under reduced pressure. A catalyst can be used in the above-described condensation reaction. However, the above-described condensation reaction is preferably performed without a catalyst. After the reaction, removal of a catalyst, and a bleaching and deodorizing treatment performed in a known purification process of edible oils and fats, can be applied as necessary.

The medium chain fatty acid-containing triacylglycerol having a long chain fatty acid according to the present disclosure can be manufactured by transesterification using mixed oils and fats. This mixed oils and fats can be obtained by, for example, mixing the MCT and oils and fats including 90% by mass or more of a fatty acid of 16 or more carbons as a constituent fatty acid, such as rapeseed oil or palm oil, at a mass ratio of preferably 10 : 90 to 90 : 10, and more preferably 20 : 80 to 80 : 20. The transesterification method is not particularly limited. Either of chemical transesterification and enzymatic transesterification can be used. The chemical transesterification is performed using, as a catalyst, a chemical catalyst such as sodium methylate. The chemical transesterification is non-selective transesterification that is low in position selectivity.

It is noted that some of naturally occurring oils and fats, such as coconut oil and palm kernel oil, contain the MTG. These naturally occurring oils and fats, and oils and fats obtained by performing to these naturally occurring oils and fats at least one processing selected from mixing, hydrogenating, fractionating, a transesterification treatment, and the like can also be used as the whole or a part of the MTG according to the present disclosure.

The chemical transesterification can be performed by, for example, the following operation according to a method known in the art. That is, firstly, 0.1 to 1% by mass of a catalyst is added to sufficiently dried raw material oils and fats to obtain a catalyst-containing raw material oils and fats. The catalyst-containing raw material oils and fats are stirred under reduced pressure at 80 to 120°C for 0.5 to 1 hour to perform a transesterification reaction. After the completion of the transesterification reaction, the catalyst is removed from the reaction product by washing with water. The obtained crude oils and fats can be subjected to a bleaching and deodorizing treatment performed in a known purification process of edible oil.

The enzymatic transesterification is performed using a lipase preparation as a catalyst. Selective catalysis possessed by the lipase preparation enables transesterification with 1,3-position selectivity. The enzymatic transesterification can be performed by, for example, the following operation according to a method known in the art. That is, a transesterification reaction can be performed by stirring an enzyme-containing raw material oils and fats obtained by adding 0.01 to 5% by mass of a lipase preparation to raw material oils and fats at 30 to 70°C for 1 to 40 hours. After the completion of the transesterification reaction, the lipase preparation is removed from the reaction product through filtration. The obtained crude oils and fats can be subjected to a bleaching and deodorizing treatment performed in a known purification process of edible oil.

The chocolate according to the present invention includes, in the oils and fats, the above-described medium chain fatty acid-containing triacylglycerol in an amount of 1 to 50% by mass, and preferably 5 to 30% by mass. When the content of the medium chain fatty acid-containing triacylglycerol in the oils and fats contained in the chocolate falls in the above-described range, the chocolate including a sugar alcohol is likely to express sweetness. Furthermore, the awkwardness (foreign taste) of sweetness derived from a sugar alcohol is suppressed. The content of the MCT in the medium chain fatty acid-containing triacylglycerol (MTG) is preferably 50% by mass or more, and more preferably 70 to 100% by mass.

In the present disclosure, the above-described transesterified oils and fats that contains the MCT and the above-described transesterified oils and fats that contains the MTG, and the like can be used as a sweetness modifier for the oils and fats-containing food that contains a sugar alcohol. That is, for adjusting the content of the triacylglycerol having the medium chain fatty acid of 6 to 12 carbons as the constituent fatty acid in the oils and fats of the oils and fats-containing food that contains a sugar alcohol, the above-described transesterified oils and fats that contain the MCT and the above-described transesterified oils and fats that contain the MTG can be used.

As the oils and fats used in the chocolate according to the present invention, any oils and fats raw material can be used, as long as the content of the oils and fats contained in the chocolate and the content of the triacylglycerol having the medium chain fatty acid as a constituent fatty acid satisfy the above-described range. Examples of the raw material oils and fats may include coconut oil, palm kernel oil, palm oil, fractionated palm oil (palm olein, palm super olein, and the like), shea butter, fractionated shea oil, sal fat, fractionated sal oil, illipe butter, soy bean oil, rapeseed oil, cottonseed oil, safflower oil, sunflower oil, rice oil, corn oil, sesame oil, olive oil, milk fat, and cocoa butter, as well as mixture oil or processed oils and fats thereof.

The oils and fats contained in the chocolate according to the present invention preferably includes an SOS-type triacylglycerol (hereinafter, also indicated as an SOS) in which an oleic acid (O) binds to the 2-position of glycerol and saturated fatty acids (S) of 16 or more carbons bind to the 1-position and the 3-position of glycerol. The content of the SOS in the oils and fats contained in the chocolate is preferably 25 to 85% by mass, more preferably 40 to 80% by mass, and further preferably 50 to 80% by mass. The saturated fatty acids of 16 or more carbons binding to the 1-position and the 3-position of the SOS may not be necessarily the same saturated fatty acid. The number of carbons in the saturated fatty acid binding to each of the 1-position and the 3-position is preferably 16 to 26, and more preferably 16 to 22. Furthermore, of the total amount of the saturated fatty acids binding to the above-described 1-position and 3-position, a palmitic acid (P) of 16 carbons and a stearic acid (St) of 18 carbons account for preferably 90% by mass or more, and more preferably 95% by mass or more. When the content of the SOS in the oils and fats contained in the chocolate falls within the above-described range, molding into a block, a plate, particles and the like is facilitated.

The oils and fats abundantly including the SOS (oils and fats including the SOS in an amount of 40% by mass or more, and preferably in an amount of 60% by mass or more) are preferably used as oils and fats to be contained in the chocolate, such that the oils and fats contained in the chocolate according to the present invention contain the above-described SOS-type triacylglycerol. Examples of the oils and fats abundantly containing the SOS (hereinafter, also indicated as SOS oils and fats) may include cocoa butter, palm oil, shea fat, sal fat, allanblackia fat, mowrah fat, illipe fat, mango kernel oil, and fractionated oils thereof. Furthermore, as having been already known, there may be used oils and fats obtained by performing a transesterification reaction between a palmitic acid, a stearic acid, or lower alcohol esters thereof and high oleic acid oils and fats such as high oleic sunflower oil with the 1,3-positions selective lipase preparation and thereafter fractionating the reaction product as necessary.

An example of a preferred embodiment of the chocolate according to the present invention may include a chocolate including oils and fats having the following specific composition. In these oils and fats, the mass ratio between the content of the triacylglycerol (MCT) having a constituent fatty acid consisting of only the medium chain fatty acid of 6 to 12 carbons and the content of the oils and fats abundantly including the SOS is 0.5 : 99.5 to 30 : 70.

Other than the above-described oils and fats, sugar alcohol, saccharides, and high-sweetness sweetener, a raw material commonly formulated in chocolate can also be contained in the chocolate according to the present invention to a degree that does not impair the effects of the present invention. Specific examples of a usable raw material may include dairy products such as whole milk powder and skim milk, cacao components such as cacao mass and cocoa powder, various powders such as soy flour, soy protein, processed fruit products, processed vegetable products, green tea powder, and coffee powder, gums, starches, emulsifiers, antioxidants, colorants, and flavors.

The chocolate according to the present invention can be manufactured by a conventionally known method. Examples of a raw material that can be used in the manufacturing of the chocolate according to the present invention may include oils and fats (including the MTG), cacao components, sugar alcohols, dairy products, and emulsifiers. The chocolate according to the present invention can be manufactured through a mixing process, an refining process (refining), a conching process (conching), and a cooling process, so that the content of a sugar alcohol in the chocolate according to the present invention finally reaches 20 to 70% by mass, and the content of oils and fats in the chocolate according to the present invention finally reaches 20 to 70% by mass. Particularly preferably, a tempering treatment is performed after the conching process for cooling and solidification, thereby to manufacture a tempered-type chocolate.

The chocolate according to the present invention is a low-sugar or sugarless chocolate that is obtained by using a sugar alcohol and that is still excellent in the expression of sweetness. The chocolate according to the present invention is edible as a block of chocolate having been subjected to removal from a mold or cutting. In addition, the chocolate according to the present invention can be used as coating materials, filling materials, or chip materials to be mixed into batter for confectionery and bread baking products such as bread, cakes, western confectionery, baked confectionery, doughnuts, and cream puffed cakes.

A preferred embodiment of the oils and fats-containing food according to the present invention is cream.

The cream according to the present invention may be an anhydrous cream that is essentially free of water (has a water content of less than 3% by mass), like a fat cream. The cream according to the present invention may also be a water-containing cream (water-containing emulsion) that contains water, like butter cream, whipped cream, and flour paste. Water may be contained in forms of water-in-oil type, oil-in-water type and complex emulsification type. When the cream according to the present invention is a water-containing cream, the water content of the water-containing cream is preferably 3 to 60% by mass, more preferably 5 to 50% by mass, and further preferably 10 to 40% by mass. Water used in the water-containing cream according to the present invention is preferably supplied in a form of an aqueous solution such as sugar alcohol solution or water.

The contents in the cream of the present invention and the properties of the sugar alcohol, saccharides, and high-sweetness sweetener are similar to those for the chocolate according to the present invention which have been already described. The content and the properties of the oils and fats in the cream according to the present invention are similar to those for the chocolate according to the present invention which have been already described.

The properties and the content in the oils and fats of the cream of the triacylglycerol having the medium chain fatty acid as a constituent fatty acid to be contained in the cream according to the present invention are similar to those for the chocolate according to the present invention which have been already described.

The cream according to the present invention can include other auxiliary materials usually used in cream to a degree that does not impair the effects of the present invention. Examples of the auxiliary materials may include thickening polysaccharides such as pectin, carrageenan, xanthan gum, guar gum, gum arabic, CMC, locust bean gum, and gellan gum, dairy products such as whole milk powder, buttermilk, skim milk, whole sweetened condensed milk, fresh cream, casein sodium, and milk whey, protein-related products such as soy protein, soy protein degradation products, soy whey concentrates, dried albumen, sweetened yolk, wheat gluten, and wheat gluten degradation products, emulsifiers such as monoglyceride, organic acid monoglyceride, sucrose fatty acid ester, polyglycerin fatty acid ester, lecithin, enzymatically degraded lecithin, propylene glycol fatty acid ester, and polysorbate, flavors, colorants, and antioxidants.

The cream according to the present invention can be manufactured by a method similar to the method for a known cream. For example, in the case of a water-containing cream having a high oils and fats content, the cream according to the present invention can be manufactured by the following manufacturing process. That is, an aqueous phase containing a dispersed and/or dissolved aqueous phase component, such as a sugar alcohol, is prepared. Then, oils and fats (an oil phase) added to the aqueous phase are emulsified into an oil-in-water type using a homomixer. Thereafter, an auxiliary material is poured as necessary. Then, the obtained emulsion is heated to and maintained at 70 to 100°C while performing a defoaming treatment under reduced pressure. Thereafter, the obtained product is cooled, and a flavor or the like is dispersed in the product as necessary. Thus, the cream according to the present invention can be manufactured.

The cream according to the present invention can also be used as topping materials and spread materials for breads and confectionery. Examples of the breads as food products containing the cream according to the present invention may include Danishes, sweet rolls, yeast doughnuts, and sweet buns. Examples of the confectionery may include cookies, pie, puffs, shortbreads, sponge cakes, butter cakes, and cake doughnuts.

### EXAMPLES

Next, the present invention will be described further in detail with reference to examples and comparative examples. The present invention is not limited to these examples and comparative examples.

Hereinafter, "%" means % by mass unless otherwise indicated.

The composition of triglyceride in the oils and fats was analyzed by gas chromatography (in accordance with JAOCS, vol70, 11, 1111-1114 (1993)) and by silver ion column-HPLC (in accordance with J. High Resol. Chromatogr., 18, 105-107 (1995)).

The constituent fatty acid possessed by the triacylglycerol contained in the oils and fats was analyzed by gas chromatography (in accordance with AOCS Celf-96).

### <Raw Material Oils and Fats>

As raw material oils and fats, the following oils and fats were used.

### [MCT 1]

As MCT 1, there was used an MCT (manufactured in-house by The Nisshin OilliO Group, Ltd.) which includes as a constituent fatty acid only an n-octanoic acid (8 carbons) or an n-decanoic acid (10 carbons) and has a mass ratio between the above-described n-octanoic acid and the above-described n-decanoic acid as constituent fatty acids is 75 : 25.

### [MCT 2]

As MCT 2, there was used an MCT (manufactured in-house by The Nisshin OilliO Group, Ltd.) which includes as a constituent fatty acid only an n-octanoic acid (8 carbons) or an n-decanoic acid (10 carbons) and has a mass ratio between the above-described n-octanoic acid and the above-described n-decanoic acid as constituent fatty acids is 30 : 70.

### [SOS oils and fats 1]

As SOS oils and fats 1, there was used cocoa butter (manufactured by Daito Cacao Co., Ltd., SOS content: 85.3%, of the total amount of a constituent fatty acid S possessed by SOS, P or St constitutes 95% by mass or more of the S).

### [Rapeseed oil]

Rapeseed oil (trade name: Nisshin Canola Oil, manufactured by The Nisshin OilliO Group, Ltd.) was used.

### <Sugar Alcohol>

As a sugar alcohol, the following sugar alcohols were used.

### [Sugar alcohol 1]

Reduced isomaltulose (trade name : Palachinit, manufactured by Mitsui Sugar Co., Ltd.) was used as sugar alcohol 1.

### [Sugar alcohol 2]

Erythritol (trade name : Erythritol 50M, manufactured by B Food Science Co., Ltd.) was used as sugar alcohol 2.

### [Sugar alcohol 3]

Maltitol (trade name: Lactitol LC-0, manufactured by B Food Science Co., Ltd.) was used as sugar alcohol 3.

### [Sugar alcohol 4]

Reduced saccharified starch (trade name : PO-500, Mitsubishi Shoji Foodtech Co., Ltd., Brix 71, composition of sugar alcohol: sorbitol 40%, maltitol 30%, maltotriitol 15%, and sugar alcohols of tetrasaccharides or higher 15%) was used as sugar alcohol 4.

### <High-Sweetness Sweetener>

As a high-sweetness sweetener, the following high-sweetness sweetener was used.

### [High-sweetness sweetener 1]

Sucralose (trade name : Sucralose, manufactured by San-Ei Gen FFI Inc.) was used as a high-sweetness sweetener.

### <Manufacture of Chocolate>

Chocolates of Examples 1 to 6 and Comparative examples 1 to 3 were manufactured with raw materials formulated in accordance with the formulations of Tables 1 and 2. That is, melted chocolates having passed through the processes of mixing, refining, and conching were subjected to a tempering treatment (seeding treatment) according to a method known in the art. The treated liquid chocolates were cooled and solidified in molding dies.

**[Table 1]**

| [Table 1] Formulation and evaluation of chocolate | | | | | |
|---|---|---|---|---|---|
| | Comparative example 1 | Example 1 | Example 2 | Example 3 | Example 4 |
| Formulation of raw materials (%) | | | | | |
| MCT 1 | - | 0.4 | 4.0 | 10.0 | - |
| MCT 2 | - | - | - | - | 8.0 |
| SOS oils and fats 1 | 20.75 | 20.35 | 16.75 | 10.75 | 12.75 |
| Cacao mass | 35.0 | 35.0 | 35.0 | 35.0 | 35.0 |
| Sugar alcohol 1 | 43.6 | 43.6 | 43.6 | 43.6 | 43.6 |
| Sugar alcohol 2 | - | - | - | - | - |
| Sugar alcohol 3 | - | - | - | - | - |
| High-sweetness sweetener 1 | 0.1 | 0.1 | 0.1 | 0.1 | 0.1 |
| Lecithin | 0.5 | 0.5 | 0.5 | 0.5 | 0.5 |
| Flavor | 0.05 | 0.05 | 0.05 | 0.05 | 0.05 |
| Total of raw materials | 100 | 100 | 100 | 100 | 100 |
| Oils and fats content | 40.0 | 40.0 | 40.0 | 40.0 | 40.0 |

| Composition of TAG in oils and fats (%) | | | | | |
|---|---|---|---|---|---|
| MCT | - | 1.0 | 10.0 | 25.0 | 20.0 |
| SOS | 85.3 | 84.4 | 76.7 | 64.0 | 68.2 |

| Evaluation result | | | | | |
|---|---|---|---|---|---|
| Sweetness expression | Fair | Good | Excellent | Excellent | Excellent |
| Palatability | Fair | Good | Excellent | Good | Excellent |

**[Table 2]**

| [Table 2] Formulation and evaluation of chocolate | | | | |
|---|---|---|---|---|
| | Comparative example 2 | Example 5 | Comparative example 3 | Example 6 |
| Formulation of raw materials (%) | | | | |
| MCT 1 | - | 10.0 | - | 4.0 |
| MCT 2 | - | - | - | - |
| SOS oils and fats 1 | 20.75 | 10.75 | 20.75 | 16.75 |
| Cacao mass | 35.0 | 35.0 | 35.0 | 35.0 |
| Sugar alcohol 1 | - | - | - | - |
| Sugar alcohol 2 | 43.6 | 43.6 | - | - |
| Sugar alcohol 3 | - | - | 43.6 | 43.6 |
| High-sweetness sweetener 1 | 0.1 | 0.1 | 0.1 | 0.1 |
| Lecithin | 0.5 | 0.5 | 0.5 | 0.5 |
| Flavor | 0.05 | 0.05 | 0.05 | 0.05 |
| Total of raw materials | 100 | 100 | 100 | 100 |
| Oils and fats content | 40.0 | 40.0 | 40.0 | 40.0 |

| Composition of TAG in oils and fats (%) | | | | |
|---|---|---|---|---|
| MCT | - | 25.0 | - | 10.0 |
| SOS | 85.3 | 64.0 | 85.3 | 76.7 |

| Evaluation result | | | | |
|---|---|---|---|---|
| Sweetness expression | Fair | Excellent | Fair | Excellent |
| Palatability | Fair | Good | Fair | Excellent |

### <Evaluation of Chocolate>

The chocolates of Examples 1 to 6 and Comparative examples 1 to 3 were evaluated for sweetness expression and palatability in accordance with the following evaluation criteria. The evaluation results are illustrated in Tables 1 and 2.

### <Evaluation Criteria of Chocolate>

### (1) Sweetness expression

In accordance with the following criteria, evaluation was comprehensively performed by five panelists.
Excellent: Sweetness expression is very good.
Good: Sweetness expression is good.
Fair: Average
Poor: Sweetness expression is not good.

### (2) Palatability

In accordance with the following criteria, evaluation was comprehensively performed by five panelists.
Excellent: Very delicious
Good: Delicious
Fair: Average (somewhat with foreign taste)
Poor: Not delicious

As apparent from the results in Tables 1 and 2, the chocolates of Examples 1 to 6 which contain a triacylglycerol having a medium chain fatty acid as a constituent fatty acid were excellent in sweetness expression when eaten. The chocolates of Examples 1 to 6 which include a sugar alcohol had drastically improved sweetness expression, and furthermore improved palatability.

### <Manufacture of Water-containing cream>

The water-containing creams of Example 7 and Comparative example 4 were manufactured with raw materials indicated in the formulations of Table 3. That is, according to a method known in the art, powders such as starch and protein were poured into a sugar alcohol solution which had been poured in a homo mixer, and dispersed/dissolved. Thereafter, oils and fats heated to 85°C were poured, and stirred for emulsification. Thereafter, the emulsion was heated to 80°C, and retained under reduced pressure while sometimes stirred. Furthermore, cooling was performed under reduced pressure. Thus, a paste-like water-containing cream was obtained.

**[Table 3]**

| [Table 3] Formulation and evaluation of water-containing cream | | | |
|---|---|---|---|
| Formulation of raw materials (%) | | Example 7 | Comparative example 4 |
| Oil phase | MCT 2 | 45.80 | - |
| | Rapeseed oil | - | 45.80 |
| Aqueous phase | Sugar alcohol 4 | 44.65 | 44.65 |
| | Processed starch | 3.90 | 3.90 |
| | Processed egg product | 1.17 | 1.17 |
| | Processed milk product | 3.70 | 3.70 |
| | Taste agent and flavor | 0.66 | 0.66 |
| | Thickening polysaccharides | 0.10 | 0.10 |
| | Pigment | 0.02 | 0.02 |
| Total | | 100.00 | 100.00 |

| Content in water-containing cream (%) | | | |
|---|---|---|---|
| | Oils and fats | 45.80 | 45.80 |
| | Sugar alcohol | 31.70 | 31.70 |
| | Water | 12.95 | 12.95 |
| MTG content in oils and fats of water-containing cream (%) | | 100 | 0 |

| Evaluation result | | | |
|---|---|---|---|
| | Sweetness expression | Excellent | Fair |
| | Palatability | Excellent | Fair |

### <Evaluation of Water-containing cream>

The creams of Example 7 and Comparative example 4 which were manufactured by the above-described method were evaluated for sweetness expression and palatability in accordance with the following evaluation criteria. The evaluation results are illustrated in Table 3.

### <Evaluation Criteria of Water-containing cream>

### (1) Sweetness expression

In accordance with the following criteria, evaluation was comprehensively performed by five panelists.
Excellent: Sweetness expression is very good.
Good: Sweetness expression is good.
Fair: Average
Poor: Sweetness expression is not good.

### (2) Palatability

In accordance with the following criteria, evaluation was comprehensively performed by five panelists.
Excellent: Very delicious
Good: Delicious
Fair: Average (somewhat with foreign taste)
Poor: Not delicious

Furthermore, the chocolate according to the present invention may be the following first to fourth chocolates.

The first chocolate is a chocolate having a sugar alcohol content of 20 to 70% by mass and an oils and fats content of 20 to 70% by mass, and including a triacylglycerol containing a medium chain fatty acid as a constituent fatty acid in the oils and fats.

The second chocolate is the first chocolate in which the number of carbons of the medium chain fatty acid in the triacylglycerol containing the medium chain fatty acid as a constituent fatty acid is 8 to 12.

The third chocolate is the first or second chocolate in which the triacylglycerol containing the medium chain fatty acid as a constituent fatty acid is a triacylglycerol containing only the medium chain fatty acid as a constituent fatty acid.

The fourth chocolate is any of the first to third chocolates having a high-sweetness sweetener content of 0.2% by mass or less.

## Claims

1. Chocolate or cream comprising 20 to 70% by mass of a sugar alcohol and 20 to 70% by mass of oils and fats, wherein the oils and fats contain 1 to 50% by mass of triacylglycerol consisting of a medium chain fatty acid of 6 to 12 carbons as a constituent fatty acid.

2. The chocolate or cream according to claim 1, wherein the number of carbons of the medium chain fatty acid in the triacylglycerol consisting of the medium chain fatty acid as a constituent fatty acid is 8 to 12.

3. The chocolate or cream according to claim 1 or 2, wherein the chocolate or cream has 5 to 50% by mass of the triacylglycerol consisting of the medium chain fatty acid as a constituent fatty acid.

4. The chocolate or cream according to any one of claims 1 to 3, further comprising 0.2% by mass or less of a high-sweetness sweetener.

## Patentansprüche

1. Schokolade oder Creme, enthaltend 20 bis 70 Massen-% eines Zuckeralkohols und 20 bis 70 Massen-% Öle und Fette, wobei die Öle und Fette 1 bis 50 Massen-% Triacylglycerin enthalten, bestehend aus einer mittelkettigen Fettsäure von 6 bis 12 Kohlenstoffen als konstituierende Fettsäure.

2. Schokolade oder Creme nach Anspruch 1, wobei die Anzahl der Kohlenstoffe der mittelkettigen Fettsäure im Triacylglycerin, das aus der mittelkettigen Fettsäure als konstituierende Fettsäure besteht, 8 bis 12 beträgt.

3. Schokolade oder Creme nach Anspruch 1 oder 2, wobei die Schokolade oder Creme 5 bis 50 Massen-% des Triacylglycerins enthält, das aus der mittelkettigen Fettsäure als konstituierende Fettsäure besteht.

4. Schokolade oder Creme nach einem der Ansprüche 1 bis 3, weiterhin umfassend 0,2 Massen-% oder weniger eines Süßungsmittels mit hoher Süße.

## Revendications

1. Chocolat ou crème contenant 20 à 70 % en masse d'alcool de sucre et 20 à 70 % en masse d'huiles et de graisses, les huiles et les graisses contenant 1 à 50 % en masse de triacylglycérol constitué d'un acide gras à chaîne moyenne de 6 à 12 atomes de carbone en tant qu'acide gras constitutif.

2. Chocolat ou crème selon la revendication 1, dans lequel le nombre de carbones de l'acide gras à chaîne moyenne dans le triacylglycérol constitué de l'acide gras à chaîne moyenne en tant qu'acide gras constitutif est compris entre 8 et 12.

3. Chocolat ou crème selon la revendication 1 ou 2, dans lequel le chocolat ou la crème contient 5 à 50 % en masse du triacylglycérol constitué de l'acide gras à chaîne moyenne en tant qu'acide gras constitutif.

4. Chocolat ou crème selon l'une quelconque des revendications 1 à 3, comprenant en outre 0,2 % en masse ou moins d'un édulcorant à haut pouvoir sucrant.
